# FASCICULE DE BREVET EUROPEEN

(11) **EP 0 408 090 B1**
(45) Date de publication et mention de la délivrance du brevet: **08.06.1994**
(21) Numéro de dépôt: 90117519.0
(22) Date de dépôt: 26.02.1987
(51) Int. Cl.: A01D 34/66

(54) **Faucheuse rotative**
Kreiselmäher
Rotary mower

(30) Priorité: 27.02.1986 FR 8602899
(43) Date de publication de la demande: 16.01.1991
(62) Demande divisionnaire de: 87440011.2
(73) Titulaire: KUHN S.A., F-67700 Saverne (FR)
(72) Inventeur: Ermacora, Rino, F-67700 St. Jean Saverne (FR); Neuerburg, Horst, F-67700 Saverne (FR)

(56) Documents cités:
- EP-A- 0 126 518
- EP-A- 0 171 341
- FR-A- 2 351 580
- GB-A- 2 059 236
- US-A- 2 625 784

## Description

La présente invention concerne une faucheuse comportant des organes de coupe rotatifs entraînés par des moyens de transmission logés dans un carter s'étendant sous lesdits organes de coupe rotatifs, ledit carter étant notamment constitué de modules comprenant chacun un boîtier dans lequel est guidé en rotation un organe de coupe, une entretoise s'étendant entre ce boîtier et le boîtier d'un module adjacent, et deux brides dont une première s'étend du côté du boîtier et la deuxième s'étend à l'extrémité de l'entretoise éloignée du boîtier, ces brides étant destinées à la liaison de deux modules adjacents l'un à l'autre au moyen d'organes d'assemblage s'étendant au moins sensiblement parallèlement à l'axe longitudinal du carter et traversant à la fois la partie frontale et la partie arrière de la première bride d'un module et de la deuxième bride d'un module adjacent, ladite entretoise étant formée sur une partie au moins de sa longueur par un profil tubulaire à la partie arrière duquel sont raccordées deux ailes de rigidification espacées l'une de l'autre, dirigées au moins sensiblement parallèlement à l'axe longitudinal du carter et s'étendant au moins sensiblement horizontalement, qui sont liées entre elles par au moins une nervure et qui sont raccordées auxdites brides.

Une telle faucheuse est décrite dans la EP-A-0 171 341. Cette faucheuse connue comporte un carter constitué notamment de modules comprenant chacun un boîtier dans lequel est guidé en rotation un organe de coupe, une entretoise s'étendant entre ce boîtier et le boîtier d'un module adjacent, et deux brides dont une première s'étend du côté du boîtier et la deuxième s'étend à l'extrémité de l'entretoise éloignée du boîtier. Ces brides sont destinées à la liaison de deux modules adjacents entre eux au moyen de trois boulons d'assemblage s'étendant au moins sensiblement parallèlement à l'axe longitudinal du carter et dont l'un traverse la partie frontale des deux brides adjacentes et les deux autres la partie arrière de celles-ci.

Cette faucheuse connue a l'avantage d'avoir un carter d'une construction très intéressante. En effet, le caractère modulaire de la construction du carter permet de fabriquer des faucheuses de largeur différente, tout en réduisant, voire en supprimant les pièces spécifiques à chaque largeur de travail. La production de telles faucheuses est donc très facile et permet de proposer toute une gamme de faucheuses a un coût très intéressant.

L'entretoise de chaque module de cette faucheuse connue est formée par un profil tubulaire, au travers duquel passe l'arbre de transmission servant à l'entraînement en rotation des organes de coupe rotatifs entraînés par le bas. A la partie arrière de ce profil tubulaire sont raccordées deux ailes de rigidification espacées l'une de l'autre et dirigées au moins sensiblement parallèlement à l'axe longitudinal du carter et essentiellement horizontalement. Ces deux ailes de rigidification sont raccordées latéralement aux deux brides dudit module et liées entre elles à leur extrémité arrière respective par une nervure s'étendant également parallèlement à l'axe longitudinal du carter et essentiellement verticalement. Les deux ailes de rigidification et la nervure de cette faucheuse connue constituent ainsi un second profil tubulaire raccordé à l'arrière du profil tubulaire servant à la protection de l'arbre de transmission. L'association de ces deux profils tubulaires confère certes une grande rigidité à l'entretoise du module ; leur réalisation est cependant relativement onéreuse.

Dans cette faucheuse connue, il apparaît du reste que les boulons d'assemblage arrière s'étendent, en vue de dessus, derrière le bord arrière du carter. Ils pourraient, de ce fait, occasionner une certaine gêne durant le travail.

Le but de la présente invention consiste à améliorer la forme de l'entretoise d'un module de sorte à simplifier sa réalisation tout en maintenant sa grande rigidité et à réduire, voire supprimer la gêne que pourraient occasionner les tirants d'assemblage arrière.

A cet effet, la faucheuse selon la présente invention est caractérisée par le fait que :
a) les ailes de rigidification sont liées entre elles au moyen de plusieurs nervures dirigées transversalement à l'axe longitudinal du carter ;
b) les organes d'assemblage liant deux modules adjacents l'un à l'autre sont constitués par deux tirants d'assemblage, dont l'un traverse la partie frontale des brides respectives et l'autre, la partie arrière de celles-ci ;
c) les tirants d'assemblage arrière s'étendent, en vue de dessus, sensiblement entièrement sous l'aile de rigidification supérieure des entretoises des modules.
Grâce à ces caractéristiques :
- l'entretoise d'un module est beaucoup plus simple à réaliser et est dotée d'une très grande rigidité qui lui permet de bien encaisser les sollicitations auxquelles elle est soumise pendant le travail et le transport de la faucheuse, et
- les tirants d'assemblage arrière sont bien intégrés dans le gabarit du carter et ne peuvent pas gêner le travail.

Selon une caractéristique supplémentaire de l'invention, il peut être prévu que les deux ailes de rigidification de chaque entretoise soient liées entre elles au moyen de plusieurs nervures qui s'étendent obliquement entre lesdites ailes de rigidification.

Dans ce cas, il pourra être avantageusement prévu que des nervures forment une triangulation en vue d'une rigidité optimale.

Dans une réalisation préférentielle, il est prévu que les ailes de rigidification d'une entretoise soient liées entre elles par deux nervures qui s'étendent sensiblement à partir du voisinage des extrémités de l'aile de rigidification inférieure obliquement vers le haut en convergeant vers la partie médiane de l'aile de rigidification supérieure.

Dans cette réalisation, il pourra également être avantageusement prévu que le point de raccord de l'une des nervures à l'aile de rigidification supérieure soit prévu sensiblement au premier tiers de la longueur de l'aile de rigidification supérieure et que le point de raccord de l'autre nervure à l'aide de rigidification supérieure soit prévu sensiblement au second tiers de la longueur de l'aile de rigiditication supérieure.

Selon une autre caractéristique supplémentaire de l'invention, il peut être prévu que l'aile de rigidification supérieure soit raccordée à la partie supérieure du profil tubulaire.

Selon une autre caractéristique supplémentaire de l'invention, il pourra également être prévu que l'aile de rigidification inférieure soit raccordée à la partie inférieure du profil tubulaire.

Dans ce cas, l'aile de rigidification inférieure pourra avantageusement comporter un décrochement en direction de l'aile de rigidification supérieure. La terre qui glisse le long de la face inférieure du bord frontal de l'entretoise correspondante, pourra ainsi passer aisément sous l'aile de rigidification inférieure sans occasionner de bourrage.

L'intégration des tirants d'assemblage arrière dans le gabarit du carter pourra être faite sans augmenter l'épaisseur du carter, s'il est prévu que l'aile de rigidification supérieure soit plus large que l'aile de rigidification inférieure.

Avantageusement, il pourra d'ailleurs être prévu que la largeur de l'aile de rigidification supérieure soit sensiblement le double de la largeur de l'aile de rigidification inférieure.

Il pourra également être avantageusement prévu que la largeur des nervures soit sensiblement égale à la largeur de l'aile de rigidification inférieure.

Il pourra enfin aussi être avantageusement prévu que le boîtier et l'entretoise d'un module forment une seule pièce.

L'invention sera parfaitement comprise à la lumière de la description ci-dessous d'un exemple non limitatif de réalisation de celle-ci représenté sur le dessin annexé sur lequel :
- La figure 1 représente une vue de dessus de la barre de coupe d'une faucheuse selon l'invention,
- La figure 2 représente une vue de dessus à une échelle agrandie et partiellement coupée suivant le plan II (figure 3) de la barre de coupe de la figure 1 sans organes de coupe,
- La figure 3 représente une vue en coupe suivant le plan III (figure 2) de la barre de coupe de la figure 2,
- La figure 4 représente une vue en coupe suivant le plan IV (figure 2) de la barre de coupe de la figure 2,
- La figure 5 représente une vue en coupe suivant le plan V (figure 2) de la barre de coupe de la figure 2, et
- La figure 6 représente une vue en coupe suivant le plan VI (figure 2) de la barre de coupe de la figure 2.

Avant de commencer la description des différentes figures, il y a lieu de faire observer que celle-ci est faite en admettant que la barre de coupe de la faucheuse repose, comme pendant le travail, sur un plan horizontal. Les notions d'horizontalité et de verticalité sont donc clairement définies. Du reste, le dessus de la barre de coupe sera le côté de celle-ci où s'étendent les organes de coupe. Les expressions "sur", "sous", "dessus", "dessous", "supérieur", "inférieur" sont donc également clairement définies. Enfin, l'avant de la barre de coupe est le côté de celle-ci où les organes de coupe doivent couper le produit à récolter durant l'utilisation de la faucheuse. Les expressions "avant", "arrière", "devant", "derrière" sont de ce fait aussi clairement définies.

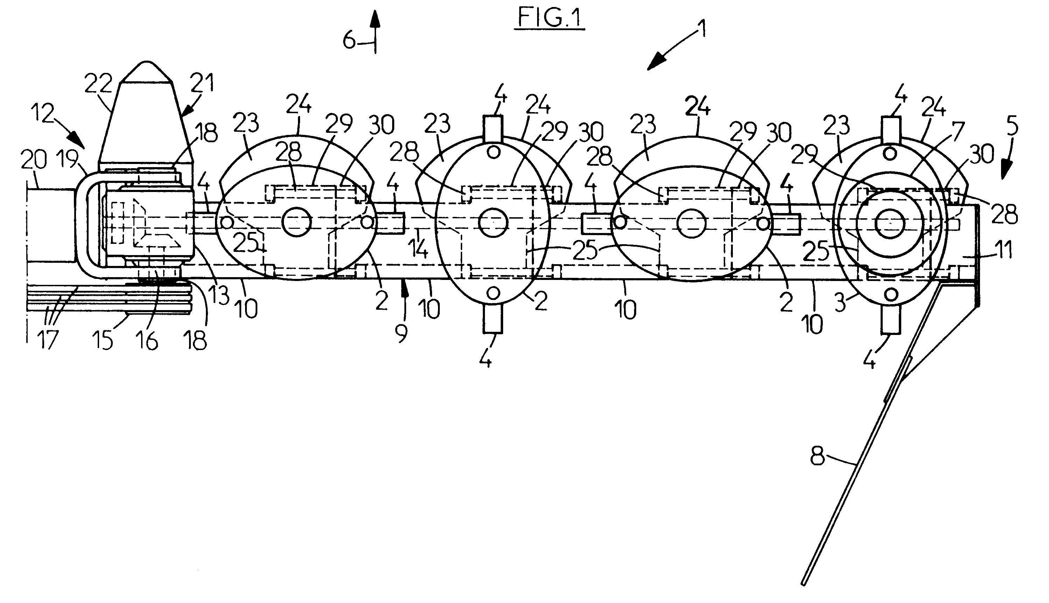

Sur la figure 1, est représentée une faucheuse selon l'invention ou plus précisément la barre de coupe (1) de celle-ci. Cette barre de coupe (1) comporte, de manière non limitative, quatre organes de coupe (2, 3) tournant chacun autour d'un axe (37) dirigé vers le haut. Chaque organe de coupe (2 ; 3) comporte deux outils de coupe (4). De préférence, le montage des outils de coupe (4) est réalisé de sorte que lesdits outils de coupe (4) s'étendent vers l'extérieur sous l'effet de la force centrifuge et qu'ils puissent pivoter vers l'arrière, lorsqu'ils rencontrent un obstacle lors de leur rotation. L'organe de coupe (3) situé à l'extrémité droite (5) de la barre de coupe (1), vue dans le sens de travail défini par la flèche (6), est surmonté d'une coiffe (7). Cette coiffe (7) collabore avec un dispositif de réduction de l'andain de produit coupé tel que la planche à andains (8) par exemple, de sorte que l'andain de produit coupé soit séparé du produit encore sur pied.

Les organes de coupe (2 ; 3) sont guidés en rotation dans un carter (9) disposé sous lesdits organes de coupe (2 ; 3). Ce carter (9) est tout d'abord formé par une succession de modules (10). A l'extrémité droite (5) de la barre de coupe (1), le carter (9) est ensuite muni d'un module d'extrémité (11). A l'extrémité gauche (12) de la barre de coupe (1), le carter (9) est enfin muni d'un carter de renvoi (13).

Dans le carter (9) sont logés des moyens de transmission (14), tels que par exemple un arbre de transmission qui collabore avec des roues dentées non représentées, en vue d'entraîner en rotation les organes de coupe (2 ; 3). L'entraînement en rotation de ces moyens de transmission (14) est réalisé par l'intermédiaire d'un mécanisme d'entraînement logé dans le carter de renvoi (13) et qui est connu de l'homme de l'art. Ce mécanisme d'entraînement reçoit le mouvement d'une poulie (15) calée sur l'axe (16). La poulie (15) est entraînée en rotation au moyen d'une autre poulie non représentée par l'intermédiaire de courroies (17). Cette autre poulie est, d'une manière connue de l'homme de l'art, entraînée par la prise de force d'un tracteur, non représenté, auquel est liée la faucheuse pendant l'utilisation, par l'intermédiaire d'un arbre de transmission à joints universels également non représenté.

Le carter de renvoi (13) comporte deux portées cylindriques (18) sensiblement concentriques avec l'axe (16) d'entrée dudit carter de renvoi (13). Ces portées cylindriques (18) supportent une chape (19) fixée à un châssis (20) par l'intermédiaire duquel la faucheuse est liée au tracteur. Grâce à cet agencement, la barre de coupe (1) peut suivre les dénivellations du sol en pivotant autour de l'axe géométrique des portées cylindriques (18), sans que les divers organes d'entraînement soient soumis à des contraintes supplémentaires. Par ailleurs, il est possible de pivoter la barre de coupe (1) dans une position sensiblement verticale pour réduire la largeur de la faucheuse au transport sur route.

A l'extrémité gauche (12) du carter (9) et sous celui-ci, ou plus précisément sous le carter de renvoi (13), est agencé un sabot (21) qui a une partie avant (22) relevée comme l'avant d'un ski. Ce sabot (21) permet à la faucheuse de glisser sur le sol pendant le travail et d'éviter les accrochages de produit coupé au carter de renvoi (13).

A l'avant, sous chaque organe de coupe (2 ; 3), le carter (9) est muni de patins protecteurs (23). Ces patins protecteurs (23) comportent une partie frontale (24) présentant, en vue de dessus, une forme sensiblement circulaire dont le rayon est plus petit que le rayon de la trajectoire extrême des outils de coupe (4). Par ailleurs, lesdits patins protecteurs (23) comportent une partie arrière (25), en forme de patin, sur laquelle repose également la barre de coupe (1) pendant le travail.

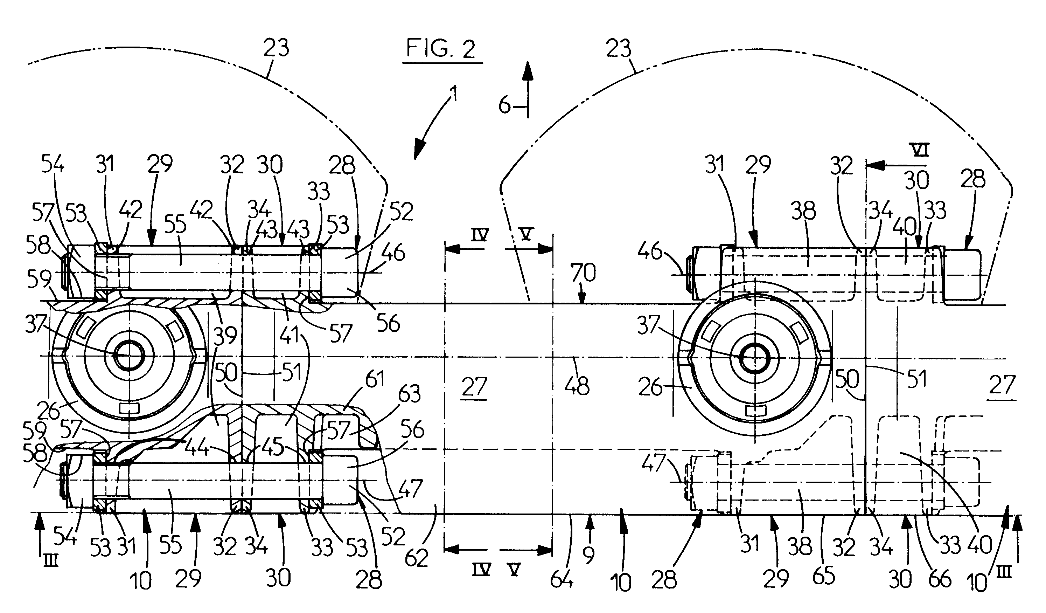

Sur les figures 2 à 6, on voit plus précisément l'agencement de la liaison entre les différents modules (10) du carter (9) de la barre de coupe (1).

Ces modules (10) se composent d'un boîtier (26), dans lequel est guidé en rotation l'organe de coupe (2 ; 3) correspondant, et d'une entretoise (27) qui s'étend entre ce boîtier (26) et le boîtier (26) d'un module (10) adjacent. Le boîtier (26) et l'entretoise (27) d'un module (10) forment, de manière non limitative, une seule pièce.

Les différents modules (10) sont liés l'un à l'autre au moyen de tirants d'assemblage (28). Pour ce faire, chaque module (10) comporte, à chacune de ses extrémités, une bride (29 ; 30), et les brides (29 ; 30) de deux modules (10) adjacents sont liées entre elles par deux tirants d'assemblage (28).

Ces brides (29 ; 30) ont une structure très particulière. En effet, il est visible sur les différentes figures que les brides (29) comportent deux ailes (31, 32) et que les brides (30) comportent deux ailes (33, 34). Ces ailes (31, 32 ; 33, 34) des brides (29 ; 30), qui s'étendent à l'avant et à l'arrière des modules (10), sont dirigées transversalement à l'axe longitudinal (48) du carter (9), préférentiellement sensiblement dans la direction de travail (6) (c'est-à-dire, en vue de dessus, au moins sensiblement perpendiculairement à l'axe longitudinal (48) du carter (9)) et s'étendent sensiblement verticalement.

En sus, elles s'étendent à une certaine distance l'une de l'autre. Ainsi, la bride (29) située du côté du boîtier (26) d'un module (10), a son aile (31) située d'un côté du plan vertical (36) dirigé dans la direction de travail (6) (c'est-à-dire, en vue de dessus, au moins sensiblement perpendiculairement à l'axe longitudinal (48) du carter (9)) et passant par l'axe de rotation (37) de l'organe de coupe (2 ; 3) guidé dans ledit boîtier (26), alors que l'autre aile (32) de la bride (29) est située de l'autre côté dudit plan vertical (36). De cette sorte, les sollicitations sont bien transmises dans le module (10) au niveau du boîtier (26) sans trop déformer ledit boîtier (26).

Les ailes (33, 34) de la bride (30) située à l'extrémité de l'entretoise (27) éloignée du boîtier (26), s'étendent également à une certaine distance l'une de l'autre. La distance qui sépare les deux ailes (33, 34) de la bride (30), est néanmoins plus petite que la distance qui sépare les deux ailes (31, 32) de la bride (29). Ceci permet de loger aisément la partie frontale des brides (29 ; 30) ainsi que les tirants d'assemblage (28), situés à l'avant sensiblement à l'intérieur des patins protecteurs (23) correspondants. On évite ainsi que des débris végétaux ne puissent éventuellement rester accrochés aux brides (29 ; 30) et aux tirants d'assemblage frontaux (28).

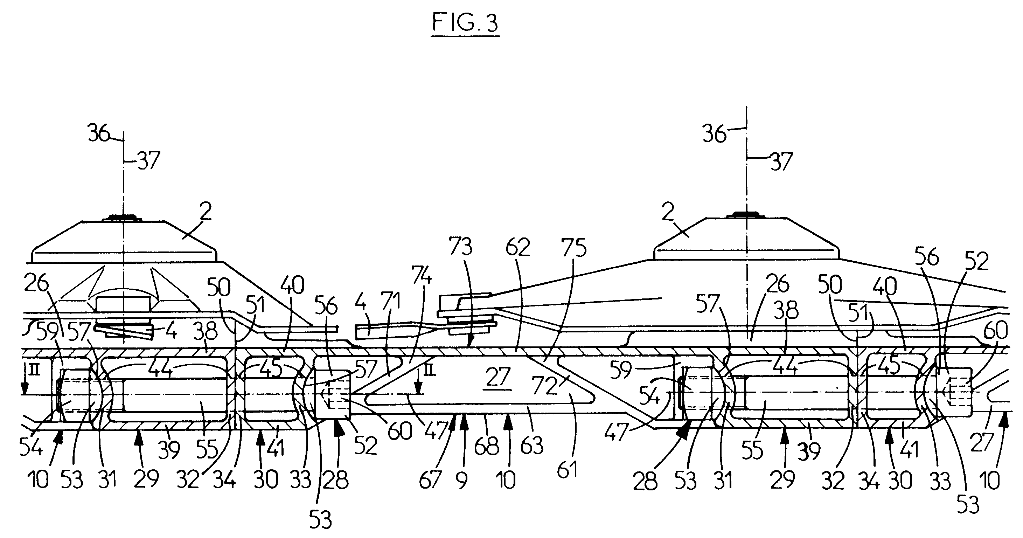

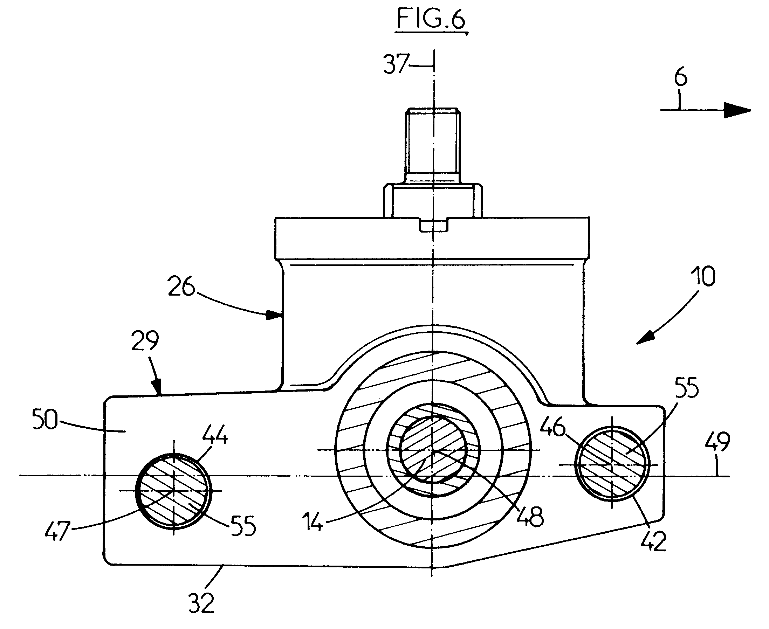

Sur les figures 2 et 3, on voit également que les brides (29 ; 30) se touchent par les ailes (32 ; 34) et que les ailes (31 ; 33) servent de faces d'appui aux tirants d'assemblage (28). De cette sorte, les tirants d'assemblage (28) peuvent avoir une longueur suffisante leur permettant de bien résister aux sollicitations auxquelles ils sont soumis et la face de contact (50 ; 51) de chaque aile (32 ; 34) peut avoir une surface suffisante pour ne pas être soumise au matage (figure 6), tout en ayant des brides (29 ; 30) qui peuvent être coulées de manière saine.

Les ailes (31, 32) de chaque bride (29) sont liées entre elles par deux ailes de raccord (38, 39) et les ailes (33, 34) de chaque bride (30) sont liées entre elles par deux ailes de raccord (40, 41). Ces ailes de raccord (38, 39 ; 40, 41) sont dirigées transversalement par rapport à la direction de travail (6) (c'est-à-dire,transversalement par rapport auxdites ailes (31, 32 ; 33, 34)) et s'étendent sensiblement horizontalement. Elles sont en sus raccordées au corps du module (10). Les ailes de raccord (38 ; 40) s'étendent à la partie haute des ailes (31, 32 ; 33, 34), tandis que les ailes de raccord (39 ; 41) s'étendent à la partie basse desdites ailes (31, 32 ; 33, 34). Ces ailes de raccord (38, 39 ; 40, 41) servent à limiter, de manière très importante, la flexion des ailes (31, 32 ; 33, 34) des brides (29 ; 30).

Avec cet agencement, les brides (29 ; 30) ont ainsi, à l'avant et à l'arrière, vues dans la direction de travail (6), une forme de tube à section sensiblement quadrilatérale.

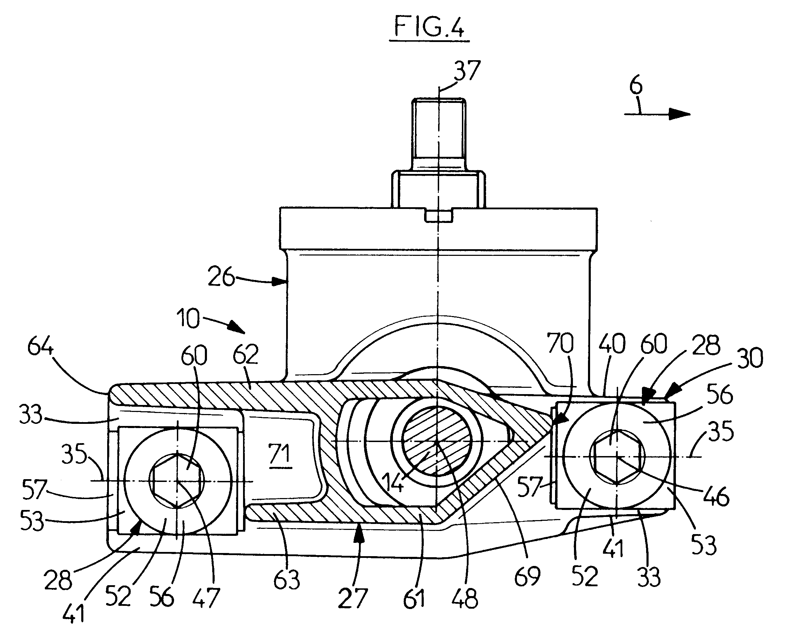

Les ailes (31, 32 ; 33, 34) des brides (29 ; 30) comportent à l'avant un trou (42 ; 43) et, à l'arrière, un trou (44, 45). Lesdits trous (42, 44 ; 43, 45) traversent les ailes (31, 32 ; 33, 34) de part en part. Comme visible sur les figures 2 et 3, les trous (42 ; 43) et (44 ; 45) sont coaxiaux. Sur les figures 4, 5 et 6, il apparaît en sus que l'axe commun (46) des trous avant (42 ; 43) et l'axe commun (47) des trous arrière (44 ; 45) s'étendent au moins sensiblement dans le voisinage du plan médian horizontal (49) de la face de contact (50 ; 51) des ailes (32 ; 34) des brides (29 ; 30).

Ces trous (42, 44 ; 43, 45) aménagés dans les ailes (31, 32 ; 33, 34) des brides (29 ; 30), sont traversés par les tirants d'assemblage (28) qui s'étendent donc, vus dans la direction de travail (6), entre les deux ailes de raccord (38, 39 ; 40, 41) raccordant les ailes (31, 32 ; 33, 34) entre elles. Chaque tirant d'assemblage (28) est constitué d'un tirant (52), de deux rondelles (53) et d'un écrou (54) vissé sur la tige (55) dudit tirant (52). Les rondelles (53) sont intercalées d'une part entre la tête (56) du tirant (52) et l'aile (33) de la bride (30) et d'autre part entre l'écrou (54) et l'aile (31) de la bride (29). Ces rondelles (53) sont avantageusement réalisées en acier, de préférence trempé, pour que la surface de contact entre la tête (56) du tirant (52) et la rondelle (53) correspondante, de même que la surface de contact entre l'écrou (54) et la rondelle (53) correspondante puissent correctement résister à la pression engendrée par le serrage de l'écrou (54) sur le tirant (52) et par les sollicitations encaissées par le tirant (52) et l'écrou (54) pendant le travail ou le transport.

Comme les ailes (31 ; 33) des brides (29 ; 30) sont en fonte, on a également augmenté la surface de la face d'appui (57) desdites ailes (31 ; 33) destinée à venir en contact avec les rondelles (53). Pour ce faire, la face d'appui (57) des ailes (31 ; 33) a la forme d'une portion de surface cylindrique. De même, la face de chaque rondelle (53) destinée à venir en contact avec ladite face d'appui (57) des ailes (31 ; 33), a également la forme d'une portion de surface cylindrique de dimension sensiblement identique à celle de la face d'appui (57).

Comme visible sur les figures 2 et 3, l'incurvation de la face d'appui (57) des ailes (31 ; 33), en forme de portion de surface cylindrique, est dirigée vers la face de contact (50 ; 51) des ailes (32 ; 34) respectives. Ceci autorise la réalisation d'un usinage très soigné de la face d'appui (57) des ailes (31 ; 33) pour que le contact entre l'aile (31 ; 33) et la rondelle (53) respective soit optimal. On garantit ainsi une bonne tenue du carter (9) après assemblage des différents modules (10). Ici, l'axe (35) de la portion de surface cylindrique qui forme la face d'appui (57) des ailes (31 ; 33) des brides (29 ; 30), s'étend sensiblement dans la direction de travail (6).

Etant donné que l'augmentation de la surface de la face d'appui (57) des ailes (31 ; 33) a été réalisée comme il vient d'être décrit plus haut, il a été possible de garder au carter (9) toute sa compacité.

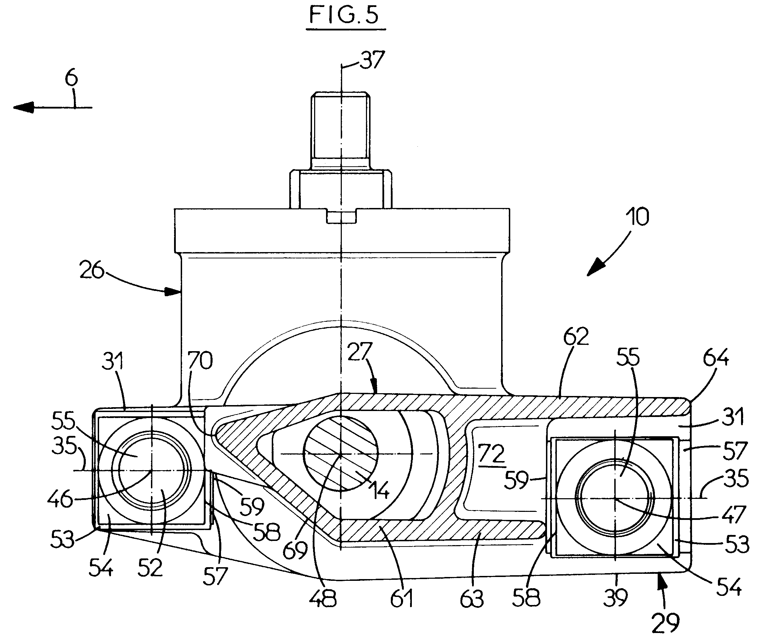

Sur les figures 2 et 5, on voit encore que l'un (58) des côtés de chaque écrou (54) s'étend dans le voisinage d'une partie (59) du module (10). Ceci permet de bloquer automatiquement la rotation de l'écrou (54) lors du vissage ou du dévissage, lorsque le côté (58) de l'écrou (54) vient buter sur la partie (59) du module (10). De cette sorte, il n'est pas nécessaire d'utiliser un outil pour réaliser ce blocage. Afin que le blocage soit effectivement réalisé, tout en laissant un certain jeu entre le côté (58) de l'écrou (54) et la partie (59) du module (10) compatible avec les tolérances générales de la fonderie, l'écrou (54) a avantageusement une forme carrée. Le côté (58) dudit écrou (54) a ainsi une longueur relativement grande, de sorte que le blocage soit toujours effectivement réalisé.

Sur les figures 3 et 4, on voit en sus que la tête (56) de chaque tirant (52) est avantageusement ronde et comporte un logement central à six pans (60). L'avantage de cet agencement apparaîtra ultérieurement.

Comme dit plus haut, le module (10) se compose d'un boîtier (26) dans lequel est guidé en rotation l'organe de coupe (2 ; 3) correspondant, et d'une entretoise (27) qui s'étend entre ce boîtier (26) et le boîtier (26) d'un module (10) adjacent.

Sur les figures 4, 5 et 6, on voit que l'entretoise (27) est formée, sur une partie au moins de sa longueur, par un profil tubulaire (61) qui entoure les moyens de transmission (14) logés dans le carter (9). A l'arrière, le profil tubulaire (61) est muni de deux ailes de rigidification (62, 63) dont l'une (62) se raccorde à la partie supérieure du profil tubulaire (61) et dont l'autre (63) se raccorde à la partie inférieure dudit profil tubulaire (61).

L'aile de rigidification supérieure (62) est plus large que l'aile de rigidification inférieure (63). Cela permet notamment de bien intégrer les tirants d'assemblage (28), situés à l'arrière, dans le gabarit du carter (9) sans que la largeur et l'épaisseur du carter (9) ne deviennent trop importantes. Ceci est très important pour l'obtention d'une bonne qualité de travail. On voit, en effet, que les tirants d'assemblage arrière (28) s'étendent, en vue de dessus, sensiblement entièrement sous les ailes de raccord supérieures (38 ; 40) et sous les ailes de rigidification supérieures (62). Avantageusement, la largeur de l'aile de rigidification supérieure (62) est sensiblement le double de la largeur de l'aile de rigidification inférieure (63). En sus, ces deux ailes de rigidification (62, 63) s'étendent transversalement à la direction de travail (6) (c'est-à-dire, au moins sensiblement parallèlement à l'axe longitudinal (48) du carter (9)) et sensiblement horizontalement. Du reste, il est encore visible sur les figures 2, 3, 4 et 5 que l'aile de rigidification supérieure (62) est en partie au moins la continuité de la partie arrière des ailes de raccord supérieures (38 ; 40) des brides (29 ; 30). La figure 2 montre en particulier que le bord arrière (64) de l'aile de rigidification supérieure (62) est sensiblement colinéaire avec le bord arrière (65 ; 66) des ailes de raccord supérieures (38 ; 40) des brides (29 ; 30).

L'aile de rigidification inférieure (63) est également, en partie au moins (notamment à ses extrémités), en continuité avec la partie arrière des ailes de raccord inférieures (39 ; 41) des brides (29 ; 30). Dans sa partie médiane (67), l'aile de rigidification inférieure (63) comporte un décrochement (68) en direction de l'aile de rigidification supérieure (62). L'espace entre ladite aile de rigidification inférieure (63) et le sol sur lequel glisse le carter (9) pendant le travail, est donc ainsi très grand pour que la terre qui glisse le long de la face inférieure (69) du bord frontal (70) de l'entretoise (27), puisse passer aisément sous l'aile de rigidification inférieure (63). On évite ainsi des bourrages.

Afin de donner à l'entretoise (27) d'un module (10) une très grande rigidité, il est encore visible que les deux ailes de rigidification (62, 63) sont liées entre elles par des nervures (71, 72) dirigées transversalement à l'axe longitudinal (48) du carter (9). Comme visible sur la figure 3, les nervures (71, 72) s'étendent sensiblement à partir des extrémités de l'aile de rigidification inférieure (63), obliquement vers le haut en convergeant vers la partie médiane (73) de l'aile de rigidification supérieure (62). Les points de raccord (74, 75) des nervures (71, 72) à l'aile de rigidification supérieure (62) sont sensiblement prévus au premier tiers et au second tiers de la longueur de l'aile de rigidification supérieure (62). Du reste, on voit encore que la largeur des nervures (71, 72) est sensiblement égale à la largeur de l'aile de rigidification inférieure (63) qui est la moins large.

Avec cette disposition, l'entretoise (27) du module (10) est très résistante, étant donné que les nervures (71, 72) forment une sorte de triangulation. Du reste, il est encore à noter que la réalisation des nervures (71, 72) est relativement aisée en fonderie.

Comme dit plus haut, les tirants (52) ont une tête (56) ronde qui est munie d'un logement central (60) à six pans. Ceci a permis de garder au carter (9) sa compacité, sans pour autant agir au détriment de la facilité du montage. Il est en effet très aisé d'accéder à la tête (56) du tirant (52) avec un outil tel qu'une visseuse pneumatique par exemple.

Différentes modifications ou améliorations peuvent être apportées à l'exemple de réalisation qui vient d'être décrit sans qu'on sorte pour autant du cadre de la présente invention tel que défini dans les revendications.

## Revendications

1. Faucheuse comportant des organes de coupe rotatifs (2-4 ; 3-4) entraînés par des moyens de transmission (14) logés dans un carter (9) s'étendant sous lesdits organes de coupe rotatifs (2-4 ; 3-4), ledit carter (9) état notamment constitué de modules (10) comprenant chacun un boîtier (26) dans lequel est guidé en rotation un organe de coupe (2-4 ; 3-4), une entretoise (27) s'étendant entre ce boîtier (26) et le boîtier (26) d'un module (10) adjacent, et deux brides (29 ; 30) dont une première (29) s'étend du côté du boîtier (26) et la deuxième (30) s'étend à l'extrémité de l'entretoise (27) éloignée du boîtier (26), ces brides (29 ; 30) étant destinées à la liaison de deux modules (10) adjacents l'un à l'autre au moyen d'organes d'assemblage (28) s'étendant au moins sensiblement parallèlement à l'axe longitudinal (48) du carter (9) et traversant à la fois la partie frontale et la partie arrière de la première bride (29) d'un module (10) et de la deuxième bride (30) d'un module (10) adjacent, ladite entretoise (27) étant formée sur une partie au moins de sa longueur par un profil tubulaire (61) à la partie arrière duquel sont raccordées deux ailes de rigidification (62 ; 63) espacées l'une de l'autre, dirigées au moins sensiblement parallèlement à l'axe longitudinal (48) du carter (9) et s'étendant au moins sensiblement horizontalement, qui sont liées entre elles par au moins une nervure (71, 72) et qui sont raccordées auxdites brides (29; 30), caractérisée par le fait que :
a) les ailes de rigidification (62, 63) sont liées entre elles au moyen de plusieurs nervures (71, 72) dirigées transversalement à l'axe longitudinal (48) du carter (9) ;
b) les organes d'assemblage (28) liant deux modules (10) adjacents l'un à l'autre sont constitués par deux tirants d'assemblage (28), dont l'un traverse la partie frontale des brides (29 ; 30) respectives et l'autre, la partie arrière de celles-ci ;
c) les tirants d'assemblage (28) arrière s'étendent, en vue de dessus, sensiblement entièrement sous l'aile de rigidification supérieure (62) des entretoises (27) des modules (10).

2. Faucheuse selon la revendication 1, caractérisée par le fait que les deux ailes de rigidification (62, 63) de chaque entretoise (27) sont liées entre elles au moyen de plusieurs nervures (71, 72) qui s'étendent obliquement entre lesdites ailes de rigidification (62, 63).

3. Faucheuse selon la revendication 2, caractérisée par le fait que les ailes de rigidification (62, 63) sont liées entre elles par des nervures (71, 72) qui forment une triangulation.

4. Faucheuse selon la revendication 2 ou 3, caractérisée par le fait que les ailes de rigidification (62, 63) sont liées entre elles par deux nervures (71, 72) qui s'étendent sensiblement à partir du voisinage des extrémités de l'aile de rigidification inférieure (63) obliquement vers le haut en convergeant vers la partie médiane (73) de l'aile de rigidification supérieure (62).

5. Faucheuse selon la revendication 4, caractérisée par le fait que le point de raccord (74) de l'une (71) des nervures (71, 72) à l'aile de rigidification supérieure (62) est prévu sensiblement au premier tiers de la longueur de l'aile de rigidification supérieure (62) et que le point de raccord (75) de l'autre nervure (72) à l'aile de rigidification supérieure (62) est prévu sensiblement au second tiers de la longueur de l'aile de rigidification supérieure (62).

6. Faucheuse selon l'une au moins des revendications 1 à 5, caractérisée par le fait que l'aile de rigidification supérieure (62) est raccordée à la partie supérieure du profil tubulaire (61).

7. Faucheuse selon l'une au moins des revendications 1 à 6, caractérisée par le fait que l'aile de rigidification inférieure (63) est raccordée à la partie inférieure du profil tubulaire (61).

8. Faucheuse selon la revendication 7, caractérisée par le fait que dans sa partie médiane (67), l'aile de rigidification inférieure (63) comporte un décrochement (68) en direction de l'aile de rigidification supérieure (62).

9. Faucheuse selon l'une au moins des revendications 1 à 8, caractérisée par le fait que l'aile de rigidification supérieure (62) est plus large que l'aile de rigidification inférieure (63).

10. Faucheuse selon la revendication 9, caractérisée par le fait que la largeur de l'aile de rigidification supérieure (62) est sensiblement le double de la largeur de l'aile de rigidification inférieure (63).

11. Faucheuse selon la revendication 9 ou 10, caractérisée par le fait que la largeur des nervures (71, 72) est sensiblement égale à la largeur de l'aile de rigidification inférieure (63).

12. Faucheuse selon l'une au moins des revendications 1 à 11, caractérisée par le fait que le boîtier (26) et l'entretoise (27) d'un module (10) forment, d'une manière connue en soi, une seule pièce.

## Claims

1. A mower comprising rotary cutter members (2-4; 3-4) driven by transmission means (14) housed in a housing (9) extending under the said rotary cutter members (2-4; 3-4), the said housing (9) being made up in particular of modules (10) each having a case (26) in which a cutter member (2-4; 3-4) is guided in rotation, a spacer (27) extending between this case (26) and the case (26) of an adjacent module (10), and two flanges (29; 30) of which the first (29) extends on the side of the case (26) and the second (30) extends at the end of the spacer (27) furthest from the case (26), these flanges (29; 30) being intended to connect two adjacent modules (10) together by means of assembly elements (28) extending at least approximately parallel to the longitudinal axis (48) of the housing (9) and passing at once through the front part and the rear part of the first flange (29) of a module (10) and of the second flange (30) of an adjacent module (10), the said spacer (27) being formed on one part at least of its length by a tubular profile (61) at the rear part of which are connected two stiffening wings (62; 63) spaced apart from each other, directed at least approximately parallel to the longitudinal axis (48) of the housing (9) and extending at least approximately horizontally, which are connected together by at least one rib (71, 72) and which are connected to the said flanges (29 ; 30), characterised in that:
a) the stiffening wings (62, 63) are connected together by means of several ribs (71, 72) directed transversely to the longitudinal axis (48) of the housing (9);
b) the assembly elements (28) connecting two adjacent modules (10) together are made up of two assembly tie rods (28), one of which passes through the front part of the respective flanges (29; 30) and the other, through the rear part of the latter;
c) the rear assembly tie rods (28) extend, when seen from above, approwimately entirely under the upper stiffening wing (62) of the spacers (27) of the modules (10).

2. A mower in accordance with claim 1 characterised in that the two stiffening wings (62, 63) of each spacer (27) are connected together by means of several ribs (71, 72) which extend obliquely between the said stiffening wings (62, 63).

3. A mower in accordance with claim 2 characterised in that the stiffening wings (62, 63) are connected together by ribs (71, 72) which form a triangulation.

4. A mower in accordance with claim 2 or 3 characterised in that the stiffening wings (62, 63) are connected together by two ribs (71, 72) which extend obliquely upwards approximately from the vicinity of the ends of the lower stiffening wing (63) converging towards the middle part (73) of the upper stiffening wing (62).

5. A mower in accordance with claim 4 characterised in that the meeting point (74) of one (71) of the ribs (71, 72) with the upper stiffening wing (62) is foreseen approximately at the first third of the length of the upper stiffening wing (62) and in that the meeting point (75) of the other rib (72) with the upper stiffening wing (62) is foreseen approximately at the second third of the length of the upper stiffening wing (62).

6. A mower in accordance with one at least of claims 1 to 5 characterised in that the upper stiffening wing (62) is connected to the upper part of the tubular profile (61).

7. A mower in accordance with one at least of claims 1 to 6 characterised in that the lower stiffening wing (63) is connected to the lower part of the tubular profile (61).

8. A mower in accordance with claim 7 characterised in that in its middle part (67), the lower stiffening wing (63) has an offset (68) in the direction of the upper stiffening wing (62).

9. A mower in accordance with one at least of claims 1 to 8 characterised in that the upper stiffening wing (62) is larger than the lower stiffening wing (63).

10. A mower in accordance with claim 9 characterised in that the width of the upper stiffening wing (62) is approximately twice the width of the lower stiffening wing (63).

11. A mower in accordance with claim 9 or 10 characterised in that the width of the ribs (71, 72) is approximately the same as the width of the lower stiffening wing (63).

12. A mower in accordance with one at least of claim 1 to 11 characterised in that the case (26) and the spacer (27) of a module (10) form, in a manner known in itself, a single piece.

## Patentansprüche

1. Mähmaschine mit rotierenden Schneidorganen (2-4; 3-4), die durch in einem Gehäuse (9) untergebrachte, sich unterhalb der rotierenden Schneidorgane (2-4; 3-4) erstreckende Übertragungselemente (14) angetrieben werden, welches Gehäuse (9) insbesondere aus Modulen (10) besteht, die jeweils ein Lagergehäuse (26), in dem ein Schneidorgan (2-4; 3-4) drehbar geführt ist, ein Zwischenstück (27), das sich zwischen diesem Lagergehäuse (26) und dem Lagergehäuse (26) eines benachbarten Moduls (10) erstreckt, und zwei Flansche (29; 30) umfassen, von denen sich der erste (29) seitlich des Lagergehäuses (26) erstreckt und der zweite (30) sich am vom Lagergehäuse (26) entfernten Ende des Zwischenstücks (27) erstreckt, und welche Flansche (29; 30) zur Verbindung von zwei benachbarten Modulen (10) mittels Verbindungselemente (28) bestimmt sind, die sich zumindest im wesentlichen parallel zur Längsachse (48) des Gehäuses (9) erstrecken und zugleich den Vorderteil und den Hinterteil des ersten Flansches (29) eines Moduls (10) und des zweiten Flansches (30) eines benachbarten Moduls (10) durchsetzen, wobei das Zwischenstück (27) mindestens über einen Teil seiner Länge durch ein Rohrprofil (61) gebildet ist, an dessen hinterem Teil zwei einen Abstand voneinander aufweisende Versteifungsflügel (62; 63) angeschlossen sind, die zumindest im wesentlichen parallel zur Längsachse (48) des Gehäuses (9) ausgerichtet sind und sich zumindest im wesentlichen horizontal erstrecken und die miteinander durch mindestens eine Rippe (71, 72) verbunden und an die Flansche (29; 30) angeschlossen sind, dadurch gekennzeichnet, daß :
a) die Versteifungsflügel (62, 63) mittels mehrerer, quer zur Längsachse (48) des Gehäuses (9) ausgerichteter Rippen (71, 72) miteinander verbunden sind;
b) die zwei benachbarte Module (10) miteinander verbindenden Verbindungselemente (28) aus zwei Stangen (28) gebildet sind, von denen die eine den Vorderteil der betreffenden Flansche (29; 30) und die andere den Hinterteil derselben durchsetzen;
c) die hinteren Spannstangen (28) sich, in Draufsicht gesehen, im wesentlichen ganz unterhalb des oberen Versteifungsflügels (62) der Zwischenstücke (27) der Module (10) erstrecken.

2. Mähmaschine nach Anspruch 1, dadurch gekennzeichnet, daß die zwei Versteifungsflügel (62, 63) jedes Zwischenstückes (27) miteinander mittels mehrerer Rippen (71, 72) verbunden sind, die sich in schräger Richtung zwischen den Versteifungsflügeln (62, 63) erstrecken.

3. Mähmaschine nach Anspruch 2, dadurch gekennzeichnet, daß die Versteifungsflügel (62, 63) miteinander durch Rippen (71, 72) verbunden sind, die ein Dreiecksfachwerk bilden.

4. Mähmaschine nach den Ansprüchen 2 oder 3, dadurch gekennzeichnet, daß die Versteifungsflügel (62, 63) miteinander durch zwei Rippen (71, 72 ) verbunden sind, die sich im wesentlichen von einem Bereich nahe der Enden des unteren Versteifungsflügels (63) schräg nach oben erstrecken, wobei sie in Richtung des Mittelteils (73) des oberen Versteifungsflügels (62) konvergieren.

5. Mähmaschine nach Anspruch 4, dadurch gekennzeichnet, daß der Verbindungspunkt (74) der einen (71) der Rippen (71, 72) am oberen Versteifungsflügel (62) im wesentlichen im ersten Drittel der Länge des oberen Versteifungsflügels (62) vorgesehen ist und der Verbindungspunkt (75) der anderen Rippe (72) am oberen Versteifungsflügel (62) im wesentlichen im zweiten Drittel der Länge des oberen Versteifungsflügels (62) vorgesehen ist.

6. Mähmaschine nach mindestens einem der Ansprüche 1 bis 5, dadurch gekennzeichnet, daß der obere Versteifungsflügel (62) mit dem oberen Teil des Rohrprofils (61) verbunden ist.

7. Mähmaschine nach mindestens einem der Ansprüche 1 bis 6, dadurch gekennzeichnet, daß der untere Versteifungsflügel (63) mit dem unteren Teil des Rohrprofils (61) verbunden ist.

8. Mähmaschine nach Anspruch 7, dadurch gekennzeichnet, daß der untere Versteifungsflügel (63) in seinem Mittelteil (67) eine Absetzung (68) in Richtung des oberen Versteifungsflügels (62) aufweist.

9. Mähmaschine nach mindestens einem der Ansprüche 1 bis 8, dadurch gekennzeichnet, daß der obere Versteifungsflügel (62) breiter ist als der untere Versteifungsflügel (63).

10. Mähmaschine nach Anspruch 9, dadurch gekennzeichnet, daß die Breite des oberen Versteifungsflügels (62) im wesentlichen das Doppelte der Breite des unteren Versteifungsflügels (63) ist.

11. Mähmaschine nach Anspruch 9 oder 10, dadurch gekennzeichnet, daß die Breite der Rippen (71, 72) im wesentlichen gleich der Breite des unteren Versteifungsflügels (63) ist.

12. Mähmaschine nach mindestens einem der Ansprüche 1 bis 11, dadurch gekennzeichnet, daß das Lagergehäuse (26) und das Zwischenstück (27) eines Moduls (10) in an sich bekannter Weise ein einziges Stück bilden.
